# EUROPÄISCHE PATENTANMELDUNG

(11) **EP 0 781 954 A1**
(43) Veröffentlichungstag der Anmeldung: **02.07.1997**
(21) Anmeldenummer: 96117784.7
(22) Anmeldetag: 06.11.1996
(51) Int. Cl.: F16M 11/10

(54) **Schwenkbare Halterung für einen Gegenstand, insbesondere ein Sichtgerät**

(30) Priorität: 29.11.1995 DE 19544519
(71) Anmelder: Siemens Nixdorf Informationssysteme AG, 33106 Paderborn (DE)
(72) Erfinder: Kohlhage, Hermann, 33102 Paderborn (DE)
(74) Vertreter: Fuchs, Franz-Josef, Dr.-Ing.

(57) **Zusammenfassung**

Beschrieben ist eine Anordnung zur Halterung eines entlang einer Bahn zwischen einer ersten Position und einer zweiten Position verschieblichen Peripheriegerätes und eines in den Verschiebeweg des Peripheriegerätes ragenden Gegenstandes. Eine einen Energiespeicher (42) enthaltende Antriebsvorrichtung schwenkt den Gegenstand (18) aus dem Verschiebeweg, wenn durch Verschieben des Peripheriegerätes (20) aus seiner ersten Position der Energiespeicher (42) freigegeben wird. Der Gegenstand (18) wird durch Verschieben des Peripheriegerätes (20) zurück in seine erste Position in seine ursprüngliche Lage geschwenkt, wobei gleichzeitig der Energiespeicher (42) geladen wird.

## Beschreibung

Die Erfindung betrifft eine Anordnung zur Halterung eines entlang einer Bahn zwischen einer ersten Position und einer zweiten Position verschieblichen Peripheriegerätes und eines in den Verschiebeweg des Peripheriegerätes ragenden Gegenstandes, insbesondere eines Sichtgerätes in einem Selbstbedienungsterminal.

Terminals für den Bereich der Kundenselbstbedienung in Banken, Reisebüros, Verkehrsbetrieben usw. enthalten im allgemeinen ein Sichtgerät für den Kundendialog, sowie einen Drucker zur Ausgabe von Informationen, zum Bearbeiten von Sparbüchern, zum Drucken von Reisetickets und ähnlichem. Zusätzlich enthalten solche Terminals Kartenlesegeräte und Tastaturen zur Identifizierung des Kunden und für die Eingabe kundenspezifischer Informationen. Alle genannten Elemente müssen leicht bedienbar sein, das heißt, alle für den Kundendialog benötigten Elemente müssen sich innerhalb eines griffgünstig angeordneten Bedienfeldes befinden.

In den Sichtgeräten werden üblicherweise Bildschirmröhren verwendet, die eine relativ große Bautiefe aufweisen.

Aus ergonomischen Gründen werden die Bedien- und Anzeigeelemente in ein unter einem Winkel von 20 bis 30 Grad geneigtes Bedienfeld eingebaut, so daß unterhalb des Sichtgerätes ein keilförmiger Raum entsteht, der nicht beliebig für den Einbau anderer Komponenten genutzt werden kann.

Ein Drucker zum Beispiel muß zum Nachlegen von Papier und zu Wartungszwecken weit aus dem Terminalgehäuse herausgezogen werden, da innerhalb des engen Gehäuses keine ausreichende Zugänglichkeit geschaffen werden kann. Deshalb wird der Drucker je nach Installationsart des Terminals nach vorn oder nach hinten aus dem Gehäuse herausgezogen. Im ersteren Fall könnte der Drucker so eingebaut werden, daß er in den oben erwähnten keilförmigen Raum unterhalb des Sichtgerätes hineinragt. Damit wäre es möglich, bedruckte Belege noch innerhalb des eigentlichen Bedienfeldes unterhalb des Sichtgerätes auszugeben. Im zweiten Fall ist dies nicht möglich, weil der Drucker beim Herausziehen nach hinten an das Sichtgerät anstoßen würde.

Das beschriebene Problem tritt aber nicht nur bei Terminals mit einem geneigten Bedienfeld auf, hinter dem Bedien- und Anzeigeelemente übereinander angeordnet sind. Vielmehr können die genannten Elemente sich auch nebeneinander hinter einem abgewinkelten Bedienfeld befinden, das an der Ecke eines Gerätes oder Gebäudes angeordnet ist, oder hinter einer gewölbten Bedienfläche eines zylinderförmigen Gerätes.

Es ist daher die Aufgabe der Erfindung, eine schwenkbare Halterung zu schaffen, die einen Gegenstand, insbesondere ein Sichtgerät in einem Selbstbedienungsterminal, aus dem Verschiebeweg eines Peripheriegerätes schwenkt, ohne daß hierzu zusätzliche Handgriffe notwendig werden.

Die Aufgabe wird durch die kennzeichnenden Merkmale des Hauptanspruchs gelöst.

Der Gegenstand ist um eine senkrecht zum Verschiebeweg des Peripheriegerätes verlaufende Schwenkachse schwenkbar, die den Gegenstand auf der nicht in diesen Verschiebeweg ragenden Seite durchdringt. Wird der Gegenstand um diese Achse verschwenkt, so gelangt sein in den Verschiebeweg ragender Teil aus diesem Verschiebeweg und das Peripheriegerät kann ohne Kollision mit dem Gegenstand an diesem vorbeibewegt werden.

Die Verschwenkung wird durch eine Antriebsvorrichtung bewirkt, die einen Energiespeicher enthält. Die Verschwenkung wird dadurch eingeleitet, daß das Peripheriegerät aus seiner Betriebsposition geschoben wird. Dadurch wird der Energiespeicher freigegeben, die darin gespeicherte Energie setzt die Antriebsvorrichtung in Betrieb. Wird das Peripheriegerät in seine Betriebsposition zurückgeschoben, so schwingt auch der Gegenstand in seine ursprüngliche Lage zurück. Dabei wird gleichzeitig der Energiespeicher geladen.

Weitere Merkmale, Weiterbildungen und Vorteile der Erfindung sind der folgenden Beschreibung und der Zeichnung eines Ausführungsbeispiels zu entnehmen. Die Zeichnung zeigt in
- Fig. 1: eine geschnittene Seitenansicht eines Selbstbedienungsterminals mit einem Sichtgerät und einem Drucker in Betriebsposition,
- Fig. 2: eine Ansicht entsprechend Fig. 1 mit nach hinten aus dem Selbstbedienungsterminal herausgefahrenem Drucker.

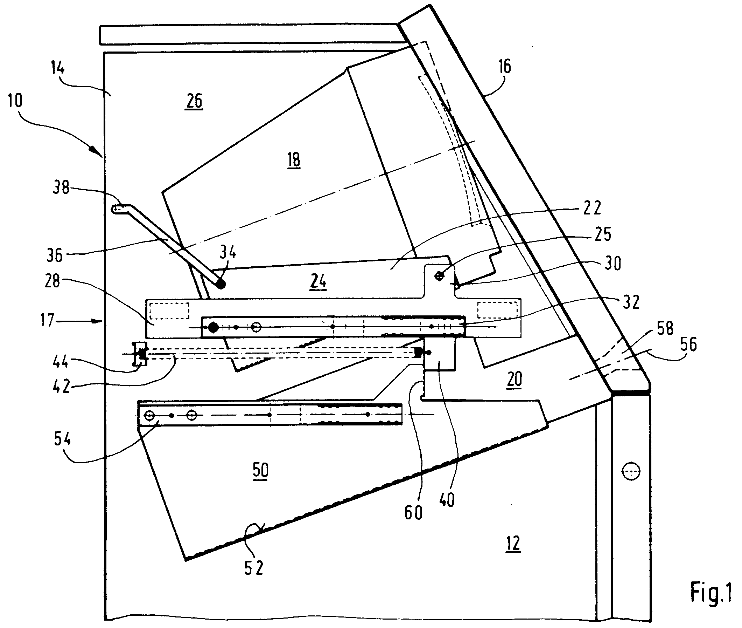

In Fig. 1 ist ein Selbstbedienungsterminal 10 in geschnittener Seitenansicht schematisch dargestellt. Es umfaßt ein Unterteil 12 mit einer senkrechten Vorderwand und ein Oberteil 14 mit einem um ca. 30° nach hinten geneigten Bedienfeld 16. Hinter dem oberen Bereich des Bedienfeldes ist ein Sichtgerät 18 und darunter ein Drucker 20 eingebaut. Die hintere Seite des Selbstbedienungsterminals 10 weist eine Öffnung 17 auf, die durch eine nicht dargestellte Tür verschließbar ist.

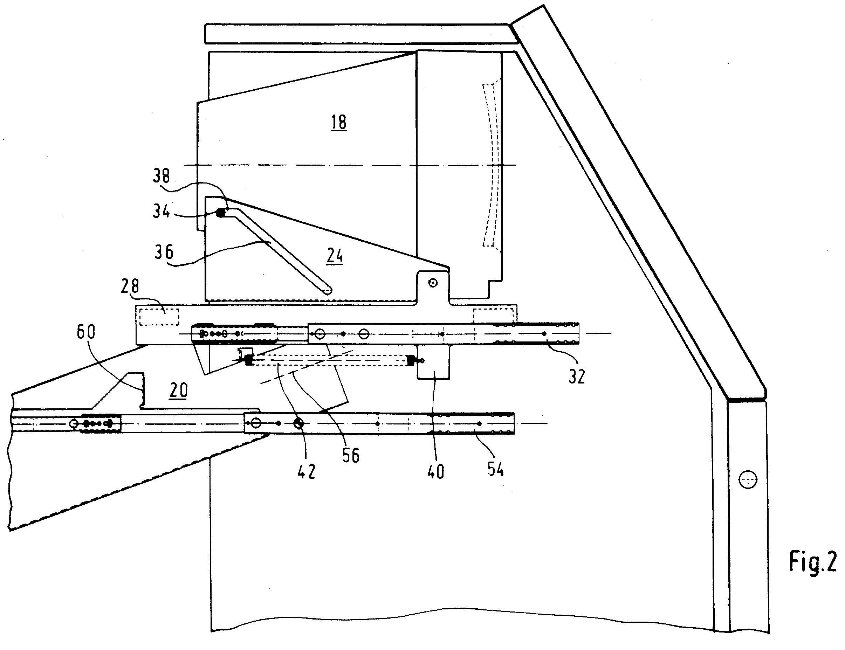

Das Sichtgerät 18 ist in einer U-förmigen Wanne 22 aufgestellt, deren U-Schenkel 24 parallel zu den Seitenwänden 26 des Selbstbedienungsterminals 10 ausgerichtet sind. Die dem Bedienfeld 16 nahe Vorderseite der Wanne 22 wird von einem Schlitten 28 getragen. Dazu ist sie um eine parallel zu dem Bedienfeld verlaufende Schwenkachse 25 schwenkbar, deren Widerlager in Vorsprüngen 30 des Schlittens 28 zu beiden Seiten der Wanne 22 liegen. Der Schlitten 28 ist auf Teleskopschienen 32 zwischen einer dem Bedienfeld 16 nahen Betriebsposition (Fig. 1) und einer nach hinten verschobenen Serviceposition (Fig. 2) verfahrbar. Die Innenschiene jeder Teleskopschiene 32 ist an dem Schlitten 28 und die Außenschiene ortsfest in dem Oberteil 14 befestigt.

Bei der der Öffnung 17 zugewandten hinteren Seite der Wanne 22 ist an deren U-Schenkeln 24 je ein Führungszapfen 34 angebracht, der in einer in dem Oberteil 14 ortsfesten Führungsnut 36 verschieblich gelagert ist. Die Führungsnut steigt von vorne nach hinten unter einem Winkel von 40° an und endet hinten in einem waagerecht verlaufenden Teil 38.

Unterhalb des in den Figuren 1 und 2 sichtbaren Vorsprungs 30 ist der Schlitten 28 mit einem nach unten weisenden Befestigungslappen 40 versehen, an dem der eine Schenkel einer Zugfeder 42 angreift. Der andere Schenkel ist über eine an einer Seitenwand 26 befestigte Lasche 44 mit dem Gehäuse des Selbstbedienungsterminals 10 gekoppelt. Die Zugfeder 42 ist gespannt, wenn das Sichtgerät 18 sich in der Betriebsposition (Fig. 1) und entspannt, wenn es sich in der Serviceposition (Fig. 2) befindet.

Der Drucker 20 ist in einer U-förmigen Druckerwanne 50 aufgestellt, deren Unterstützungsfläche 52 für den Drucker 20 normal zum Bedienfeld 16 ausgerichtet, also um etwa 30° nach hinten geneigt ist. Die Druckerwanne 50 ist auf zweiten Teleskopschienen 54 zwischen einer dem Bedienfeld 16 nahen Betriebsposition (Fig. 1) und einer nach hinten verschobenen Serviceposition (Fig. 2) verfahrbar. Die Innenschiene jeder Teleskopschiene 54 ist an der Druckerwanne 50 und die Außenschiene ortsfest an einer Seitenwand 26 im Inneren des Selbstbedienungsterminals 10 befestigt. In der Betriebsposition mündet der durch eine gestrichelte Linie dargestellte Papierausgabeweg 56 des Druckers 20 in eine Ausgabeöffnung 58 im Bedienfeld 16. An der Druckerwanne 50 ist ein Mitnehmer 60 angebracht, der in den Verschiebeweg des Befestigungslappens 40 ragt. Die Druckerwanne 50 ist durch eine nicht dargestellte Verriegelung in der Betriebsposition des Druckers 20 arretierbar.

Fig. 1 zeigt das Sichtgerät 18 und den Drucker 20 in ihren Betriebspositionen. Der Mitnehmer 60 liegt an dem Befestigungslappen 40 an und die Zugfeder 42 ist gespannt. Wird nun die Verriegelung der Druckerwanne 50 gelöst und der Drucker in Richtung der in Fig. 2 gezeigten Serviceposition bewegt, gibt der Mitnehmer 60 den Befestigungslappen 40 frei, und die in der Zugfeder 42 gespeicherte Energie kann den Schlitten 28 in Richtung der hinteren Öffnung 17 antreiben. Dabei gleitet der Führungszapfen 34 in der Führungsnut 36 entlang, wodurch die hintere Seite der Wanne 22 und damit das Sichtgerät 18 aus dem Verschiebeweg des Druckers 20 geschwenkt wird. Die Wanne 22 befindet sich in einer stabilen Position, da der Führungszapfen 34 in dem waagerechten Bereich 38 der Führungsnut 36 ruht. Die Zugfeder 42 weist in dieser Position noch eine Restspannung auf, die den Schlitten 28 in seiner in Fig. 2 linken Endposition mit einer Haltekraft beaufschlagt. Der Drucker 20 kann nun in seine außerhalb des Selbstbedienungsterminals 10 liegende Serviceposition verfahren werden, ohne mit dem Sichtgerät 18 zu kollidieren. Da der Verschiebeweg des Druckers 20 größer ist als der des Sichtgerätes 18, löst sich der Mitnehmer 60 dabei von dem Befestigungslappen 40 und entfernt sich von ihm.

Wird der Drucker 20 wieder in seine Betriebsposition geschoben, trifft der Mitnehmer 60 nach einem Teil des Verschiebeweges des Druckers 20 auf den Befestigungslappen 40 und nimmt den Schlitten 28 auf dem restlichen Wegstück mit. Die hintere Seite der Wanne 22 wird dabei wieder abgesenkt und die Zugfeder 42 gespannt.

Die vorbeschriebene Anordnung des Sichtgerätes 18 auf dem Schlitten 28 und der Schwenkachse 25 bei der unteren Vorderkante des Sichtgerätes gestattet es, letzteres in der höchstmöglichen Position hinter dem Bedienfeld 16 anzuordnen. In der Serviceposition (Fig. 2) ist das Sichtgerät 18 um eine kleine Strecke nach hinten gefahren und seine obere Vorderkante von der oberen Begrenzungswand des Selbstbedienungsterminals 10 frei. Das Sichtgerät kann in dieser Position leicht aus der dann waagerecht liegenden Wanne 22 entnommen werden. Ist eine Verschiebung nicht gewünscht, so genügt es, eine feste Schwenkachse in die Nähe der oberen Vorderkante des Sichtgerätes 18 zu legen und auf einen verfahrbaren Schlitten, Führungsnute und Führungszapfen zu verzichten. Das Sichtgerät 18 führt dann nur die zur Freigabe des Drucker-Verschiebeweges erforderliche Schwenkbewegung aus. Die Feder muß dann nur eine reine Drehbewegung um die Schwenkachse unterstützen.

Die erfindungsgemäße Anordnung hat den Vorteil, daß handelsübliche Sichtgeräte und Drucker eingesetzt werden können, die üblicherweise im wesentlichen rechteckige Gehäuse haben. Durch die Schrägstellung gegenüber dem Verschiebeweg lassen sich auch im Querschnitt nicht rechtwinklige Freiräume nutzen, was einen kompakten Aufbau gestattet und die Unterbringung aller Peripheriegeräte hinter einem flächenmäßig begrenzten Bedienfeld ermöglicht. Durch die Aufstellung der Peripheriegeräte in einer Wanne erübrigt sich die nachträgliche Anbringung von Befestigungspunkten an den Geräten.

## Patentansprüche

1. Anordnung zur Halterung eines entlang einer Bahn zwischen einer ersten Position und einer zweiten Position verschieblichen Peripheriegerätes und eines in den Verschiebeweg des Peripheriegerätes ragenden Gegenstandes,
**dadurch gekennzeichnet,**
daß eine einen Energiespeicher (42) enthaltende Antriebsvorrichtung vorgesehen ist, die den Gegenstand (18) aus dem Verschiebeweg schwenkt, wenn durch Verschieben des Peripheriegerätes (20) aus seiner ersten Position (Fig. 1) der Energiespeicher (42) freigegeben wird, und daß der Gegenstand (18) durch Verschieben des Peripheriegerätes (20) zurück in seine erste Position (Fig. 1) in seine ursprüngliche Lage geschwenkt wird, wobei gleichzeitig der Energiespeicher (42) geladen wird.

2. Anordnung nach Anspruch 1,
**dadurch gekennzeichnet,**
daß der Gegenstand (18) um eine senkrecht zum Verschiebeweg des Peripheriegerätes (20) verlaufende Schwenkachse (25) schwenkbar ist, die den Gegenstand (18) auf seiner in Richtung der ersten Position (Fig. 1) weisenden Vorderseite durchdringt und parallel zu dieser verläuft, daß das Widerlager der Schwenkachse (25) an einem den Gegenstand (18) tragenden, parallel zu der Bahn des Peripheriegerätes (20) verschieblichen Schlitten (28) angeordnet ist,
und daß nahe der in Richtung der zweiten Position (Fig. 2) weisenden Hinterseite des Gegenstandes (18) an wenigstens einer seiner von der Schwenkachse (25) durchdrungenen Seiten oder einer normal zu der Schwenkachse (25) ausgerichteten Seite (24) des Schlittens (28) ein Führungszapfen (34) angebracht ist, der in einer ortsfesten, den Gegenstand (18) von dem Peripheriegerät (20) wegführenden Führungsnut (36) verschieblich gelagert ist.

3. Anordnung nach Anspruch 2,
**dadurch gekennzeichnet,**
daß die Schwenkachse (25) bei der dem Peripheriegerät (20) benachbarten Kante des Gegenstandes (18) und parallel zu dieser verläuft.

4. Anordnung nach Anspruch 2 oder 3,
**dadurch gekennzeichnet,**
daß die Antriebsvorrichtung wenigstens eine den Schlitten (28) mit einer in Richtung der zweiten Position (Fig. 2) weisenden Kraft beaufschlagende Feder (42) ist.

5. Anordnung nach Anspruch 4,
**dadurch gekennzeichnet,**
daß an dem Peripheriegerät (20) ein Mitnehmer (60) angeordnet ist, der wenigstens auf einem letzten Abschnitt des Verschiebeweges des Peripheriegerätes (20) in Richtung der ersten Position (Fig. 1) an dem Schlitten (28) angreift, diesen in Richtung der ersten Position (Fig. 1) verschiebt und dabei die Feder (42) spannt.

6. Selbstbedienungsterminal (10) für die selbstbediente Abwicklung von Bankgeschäften, Buchungen oder dergleichen mit einer Anordnung nach einem der vorhergehenden Ansprüche und mit einem in Greifhöhe eines Benutzers angeordneten, von diesem pultförmig nach oben wegweisenden Bedienfeld (16), hinter dem im oberen Bereich ein Sichtgerät (18) und darunter wenigstens ein Peripheriegerät (20) angeordnet ist, wobei in dem Bedienfeld (16) Durchbrüche für die Bedien-, Anzeige- und Ein-/Ausgabeelemente der genannten Geräte angeordnet sind,
**dadurch gekennzeichnet,**
daß das Sichtgerät (18) und das wenigstens eine Peripheriegerät (20) von der Rückseite des Terminals (10) her zugänglich sind und daß das Peripheriegerät (20) auf Teleskopschienen (54) aus einer hinteren Öffnung (17) des Selbstbedienungsterminals (10) herausfahrbar ist, wobei die Hinterkante des Sichtgerätes (18) nach oben geschwenkt wird.

7. Anordnung nach Anspruch 6,
**dadurch gekennzeichnet,**
daß das Sichtgerät (18) und/oder das Peripheriegerät (20) in einer Wanne (22; 50) aufgestellt ist/sind.

8. Anordnung nach Anspruch 6 oder 7,
**dadurch gekennzeichnet,**
daß das Peripheriegerät ein Belegdrucker (20) ist.
